Europäisches Patentamt

European Patent Office

Office européen des brevets

(19)

(11) **EP 1 151 246 B1**

(12) **FASCICULE DE BREVET EUROPEEN**

(45) Date de publication et mention
de la délivrance du brevet:
**28.12.2005 Bulletin 2005/52**

(21) Numéro de dépôt: **00901678.3**

(22) Date de dépôt: **26.01.2000**

(51) Int Cl.$^7$: **G01C 19/56**

(86) Numéro de dépôt international:
**PCT/FR2000/000211**

(87) Numéro de publication internationale:
**WO 2000/045128 (03.08.2000 Gazette 2000/31)**

(54) **STRUCTURE MONOLITHIQUE DE GYROMETRE VIBRANT**

MONOLITHISCHE STRUKTUR EINES SCHWINGUNGS-GYROSKOPS

MONOLITHIC STRUCTURE OF A VIBRATING GYROSCOPE

(84) Etats contractants désignés:
**DE FR GB IT**

(30) Priorité: **01.02.1999 FR 9901138**

(43) Date de publication de la demande:
**07.11.2001 Bulletin 2001/45**

(73) Titulaire: **ONERA (Office National d'Etudes et de
Recherches Aérospatiales)
92320 Châtillon (FR)**

(72) Inventeurs:
• **JANIAUD, Denis
F-91940 Les Ulis (FR)**

• **LE TRAON, Olivier
F-91430 Vauhallan (FR)**
• **LECORRE, Bernard
F-92360 Meudon la Forêt (FR)**
• **MULLER, Serge
F-91340 Ollainville (FR)**

(74) Mandataire: **Cabinet Martinet & Lapoux
BP 405
78055 Saint Quentin en Yvelines Cédex (FR)**

(56) Documents cités:
**FR-A- 2 564 203          FR-A- 2 739 190
US-A- 5 166 571**

## Description

La présente invention concerne, de manière générale, un gyromètre vibrant pouvant être utilisé, par exemple, pour la stabilisation ou le guidage de véhicules, ou pour la navigation d'automobiles.

Plus particulièrement, l'invention a trait à une structure monolithique de gyromètre vibrant comprenant une partie fixe, un résonateur et un dispositif mécanique reliant le résonateur à la partie fixe et permettant d'éviter des fuites d'énergie mécanique vibratoire du résonateur vers la partie fixe.

Le résonateur est destiné à travailler selon deux modes de vibration distincts, les directions de vibration de ces deux modes étant perpendiculaires entre elles. Ainsi, lorsque le gyromètre subit une rotation de vitesse angulaire $\vec{\Omega}$ autour d'un axe perpendiculaire à ces deux directions de vibration, cette rotation $\vec{\Omega}$ étant référencée par rapport à un repère inertiel dit galiléen, il apparaît un couplage entre les deux modes de vibration du résonateur. Ce couplage est dû aux accélérations de Coriolis $\vec{\gamma}_c$ qui s'appliquent à tous les points matériels du résonateur et dont l'expression analytique s'écrit sous la forme du produit vectoriel $\vec{\gamma}_c = 2\vec{\Omega} \wedge \vec{v}$, $\vec{v}$ étant la vitesse du point matériel considéré, exprimée dans le repère lié au résonateur.

Il existe plusieurs façons d'exploiter ce couplage afin de mesurer la vitesse angulaire $\vec{\Omega}$.

Par exemple, on peut choisir de maintenir en vibration l'un des deux modes de vibration du résonateur. La rotation de vitesse $\vec{\Omega}$ fait alors apparaître une vibration suivant l'autre mode, d'amplitude proportionnelle à $\Omega$. La mesure de cette amplitude, convertie généralement sous forme de signaux électriques, permet ainsi de déterminer $\Omega$.

Une deuxième façon d'exploiter le couplage entre les deux modes de vibration du résonateur nécessite que les fréquences de résonance de ces deux modes soient identiques, et consiste à les maintenir en vibration simultanément de telle sorte que l'un des modes soit en quadrature de phase par rapport à l'autre. Ainsi, si les amplitudes de vibration sont égales pour les deux modes, chaque point matériel du résonateur décrit un cercle à chaque période de la vibration. La pulsation $\omega_0$ de cette vibration, observée dans un repère inertiel, n'est pas affectée par la rotation de vitesse angulaire $\vec{\Omega}$. Par contre, la pulsation $\omega$ de cette même vibration, observée avec des moyens de mesure liés au résonateur, dépend de $\Omega$ suivant la relation $\omega = \omega_0 \pm \Omega$. Ainsi, on peut réaliser un oscillateur dont les variations de fréquence sont représentatives de celles de la vitesse de rotation.

Une troisième façon d'exploiter le couplage entre les deux modes de vibration du résonateur nécessite comme la précédente que les fréquences de résonance de ces deux modes soient identiques, et consiste à les maintenir en vibration simultanément de telle sorte que les deux modes soient en phase l'un par rapport à l'autre. Ainsi, les vibrations de chaque point matériel du résonateur sont contenues dans un plan. Si le système d'entretien des vibrations est conçu pour ne privilégier aucune orientation particulière de ce plan par rapport au résonateur, alors l'orientation initiale, observée dans un repère inertiel, n'est pas affectée par la rotation de vitesse angulaire $\vec{\Omega}$. Par contre, ce même plan de vibration, observé avec des moyens liés au résonateur, subit la rotation opposée à celle imposée au résonateur. Contrairement aux deux premières façons de procéder, cette troisième façon ne permet pas de mesurer directement la vitesse de rotation $\Omega$, car c'est l'orientation $\varphi$ du plan de vibration qui est délivrée par le capteur. Ce fonctionnement en mode gyroscope est intéressant pour certaines applications, et permet également de connaître la vitesse au moyen d'un circuit dérivateur ($\Omega = d\varphi/dt$).

Pour ces trois façons d'exploiter le couplage entre les deux modes de vibration du résonateur, la précision de la mesure fournie par le gyromètre dépend de la qualité des vibrations de ces modes. Plus précisément, pour chacun des modes, il est préférable que le coefficient de surtension soit élevé, ce qui permet d'amplifier les phénomènes mécaniques mis en jeu par les accélérations de Coriolis. Pour un résonateur, le coefficient de surtension, appelé aussi coefficient de qualité, est défini comme le quotient de l'énergie emmagasinée dans le résonateur par l'énergie perdue pendant une période de la vibration. Le coefficient de qualité dépend de plusieurs paramètres. En premier lieu la nature du matériau utilisé pour la fabrication du résonateur conditionne les pertes d'énergie mécanique par frottement interne. C'est pourquoi le matériau est avantageusement du quartz ou du silicium, pour lesquels ces pertes sont réduites, et qui présentent de plus l'intérêt d'un coût modéré d'approvisionnement. Un deuxième paramètre d'influence sur le coefficient de qualité est la nature de la vibration du résonateur. À titre d'exemple, si le résonateur est une poutre vibrant en flexion, la valeur du coefficient de qualité est tributaire des échanges de chaleur entre les fibres alternativement tendues et comprimées, et ainsi cette valeur est proportionnelle au carré de l'épaisseur de la poutre. Ces deux premiers paramètres déterminent ce que l'on peut appeler le coefficient de qualité "intrinsèque" du résonateur. Dans la pratique, le coefficient de qualité réel du résonateur est au plus égal à ce coefficient intrinsèque, car il est généralement affecté par d'autres paramètres d'influence, en particulier le moyen de fixation du résonateur sur un support. Il est souhaitable que ce moyen de fixation permette d'éviter des fuites d'énergie mécanique du résonateur vers le support. Plus précisément, il est souhaitable de limiter ces fuites d'énergie à un niveau en relation avec le coefficient de qualité intrinsèque du résonateur. À titre d'exemple, si l'on désire tirer le meilleur profit d'un résonateur dont le coefficient de qualité intrinsèque vaut $3 \times 10^5$, il est nécessaire que le moyen de fixation permette de limiter les fuites d'énergie par période à une valeur nettement plus faible que (3 x 10⁵)⁻¹ fois l'énergie emmagasinée dans le résonateur. À cette fin, le moyen de fixation peut se composer d'une partie fixe et d'un dispositif mécanique reliant le résonateur à la partie fixe et permettant de réduire suffisamment les fuites d'énergie mécanique du résonateur vers la partie fixe. Ce dispositif réalise ainsi une fonction de filtrage mécanique des vibrations du résonateur. Ainsi, la partie fixe est très peu sollicitée par les vibrations du résonateur. Ainsi, lorsque la partie fixe est fixée sur un support, par exemple par collage, les fuites d'énergie mécanique vers le support peuvent être suffisamment réduites. Le résonateur, la partie fixe et le dispositif de filtrage mécanique constituent une structure de gyromètre.

De préférence, la structure de gyromètre est monolithique, ce qui permet d'éviter les inconvénients dus à des assemblages, tels que des comportements instables dans le temps ou lors de variations de température.

De préférence, la structure monolithique de gyromètre est usinée dans une plaque de matériau d'épaisseur uniforme, ce qui rend peu coûteuse sa fabrication par usinage chimique.

De préférence, le résonateur est un diapason formé de deux branches identiques et parallèles, disposées en regard l'une de l'autre et solidaires, chacune à une extrémité, d'une partie commune. L'un des modes de vibration est un mode de flexion, pour lequel les deux branches vibrent en flexion en opposition de phase entre elles, les déplacements vibratoires des deux branches s'effectuant parallèlement au plan de la plaque de matériau. Ce mode de vibration s'apparente ainsi à celui d'un diapason de musique. L'autre mode de vibration est un mode de torsion, pour lequel les deux branches vibrent en flexion en opposition de phase entre elles, les déplacements vibratoires des deux branches s'effectuant perpendiculairement au plan de la plaque de matériau. Ainsi, les directions de vibration de ces deux modes sont perpendiculaires entre elles et il apparaît un couplage entre ces deux modes lorsque le diapason est soumis à une rotation autour d'un axe parallèle aux deux branches. Cet axe est désigné sous le nom d'axe de sensibilité du gyromètre. L'intérêt de choisir un diapason pour constituer le résonateur réside dans le fait que l'énergie mécanique reste spontanément localisée dans le résonateur pour le mode de flexion, les efforts mécaniques vibratoires exercés par les deux branches à leurs "encastrements" sur la partie commune s'équilibrant dans la zone de cette partie commune voisine de ces encastrements. Pour ce mode de flexion, les fuites d'énergie mécanique peuvent donc être suffisamment réduites en fixant le diapason sur un support au niveau d'une zone de la partie commune suffisamment éloignée des encastrements des branches. Par contre, ce type de fixation ne pourrait convenir pour le mode de torsion, car le support serait sollicité par un couple alternatif à la fréquence des vibrations de torsion et il en résulterait d'importantes fuites d'énergie mécanique vers le support.

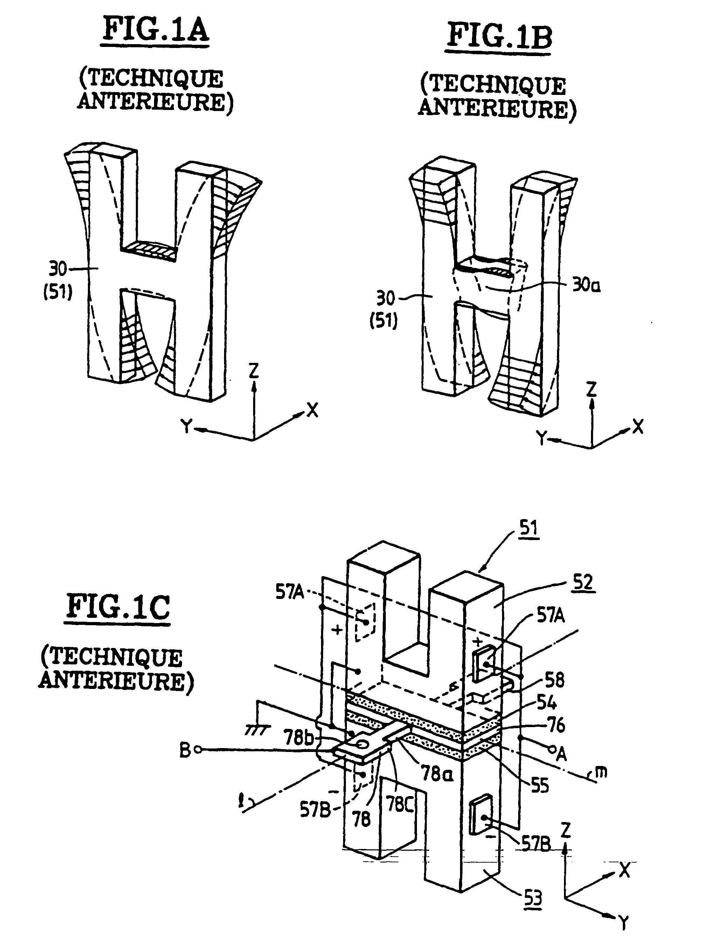

Afin de résoudre ce problème des fuites d'énergie mécanique du mode de torsion du diapason, on a proposé (brevet U.S. n° 5,166,571) une structure de gyromètre en "H" qu'on peut considérer comme étant l'association de deux diapasons ayant la même partie commune. Les figures 1A et 1B montrent les déformées vibratoires fortement agrandies de cette structure pour les modes de flexion et de torsion respectivement. Au plan du principe ce concept est intéressant puisqu'il vise à faire en sorte que les vibrations des quatre branches s'équilibrent pour chacun des deux modes. Dans la pratique cette solution présente un inconvénient concernant la fixation de cette structure, car la partie commune 30a subit des déformations vibratoires en flexion et en torsion qui ne permettent pas de la fixer directement sur un support sans provoquer d'importantes fuites d'énergie mécanique. L'utilisation de cette structure en H nécessite donc un moyen complémentaire de tenue mécanique tel que la patte de fixation 78 montrée à la figure 1C, ce qui présente l'inconvénient de ne plus pouvoir bénéficier de la qualité et du faible coût de réalisation d'un dispositif plan et monolithique.

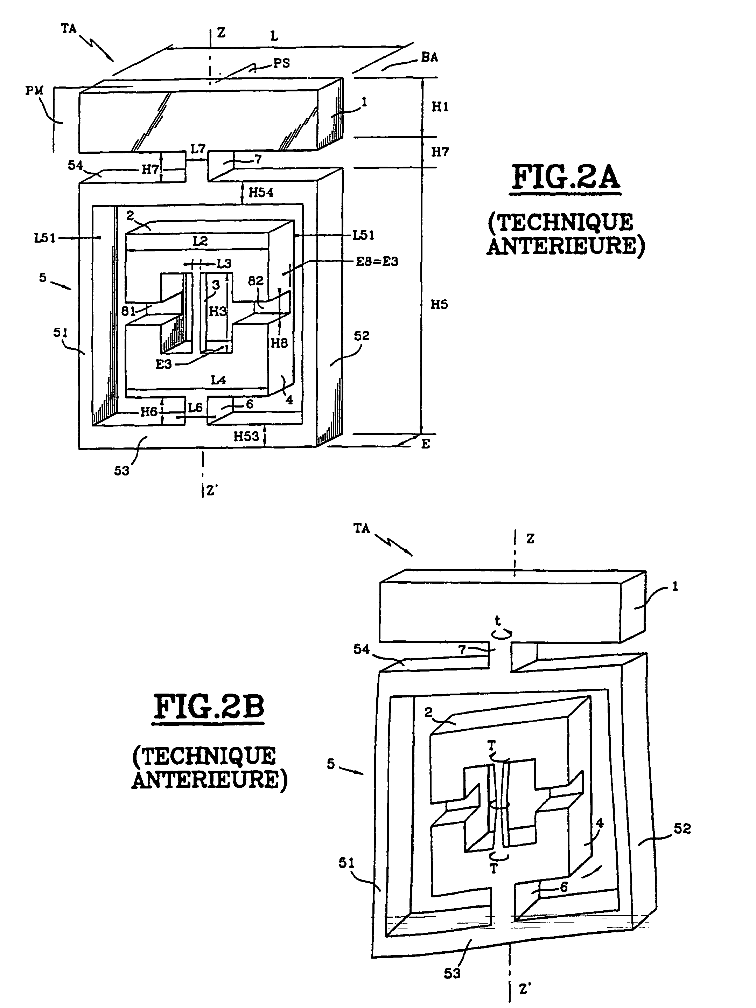

Toujours afin de résoudre le problème des fuites d'énergie mécanique du mode de torsion du résonateur, il pourrait paraître intéressant de s'inspirer de la structure de transducteur monolithique d'accélération en quartz proposée dans le brevet n° FR 2 739 190 au nom du demandeur et montrée à la figure 2A. Contrairement au gyromètre connu décrit précédemment, ce transducteur est conçu pour mesurer des accélérations et doit donc être peu sensible aux rotations. Du point de vue structurel, le transducteur représenté à la figure 2A a une structure monolithique comprenant une partie fixe 1, un résonateur 3 solidaire à ses deux extrémités d'une première partie massive mobile faisant office de masse d'épreuve 2 et d'une seconde partie massive 4 respectivement. Des premiers moyens de liaison relient chacun la première partie massive à la seconde partie massive mobile et sont constitués par deux courtes lamelles 81 et 82 (H8 << H3) de raideur en flexion importante. Les lamelles sont situées à l'aplomb du milieu de la longueur du résonateur 3 et par conséquent, les parties mobiles 2 et 4 sont en forme de U. Par ailleurs, les lamelles 81 et 82 ont une dimension d'épaisseur E8 nettement inférieure à l'épaisseur E de la plaque. Les lamelles 81 et 82 sont équivalentes à la fois à de petites charnières relativement rigides entre les parties mobiles suivant le plan de symétrie PS contenant la direction sensible perpendiculaire à la plaque de matériau, et à des liaisons rigides suivant le plan PM de la plaque. Des seconds moyens de liaison relient chacun la seconde partie massive mobile à la partie fixe et sont constitués par un cadre flexible 5 entourant les parties massives 2 et 4, un premier élément de liaison 6 reliant le cadre 5 à la seconde partie massive 4, et un second élément de liaison 7 reliant le cadre 5 à la partie fixe 1. La partie fixe est fixée sur une embase de boîtier BA. Le résonateur 3 est une lame parallélépipédique travaillant de préférence en vibration de flexion ou de torsion car les fréquences de ces vibrations sont très sensibles à la force d'extension ou de compression qui s'exerce longitudinalement au résonateur lorsque la masse d'épreuve 2 est soumise à une accélération. La mesure de la fréquence du résonateur 3 au moyen d'un dispositif approprié (non représenté) permet ainsi de connaître l'accélération appliquée au transducteur. Cette sensibilité de la fréquence du résonateur aux forces longitudinales est augmentée lorsqu'on diminue la dimension d'épaisseur de la lame parallélépipédique constituant le résonateur. Par contre, cette diminution d'épaisseur de la lame a pour conséquence une diminution de son coefficient de qualité intrinsèque, la recherche d'un compromis satisfaisant conduit à un coefficient de qualité intrinsèque de l'ordre de $10^4$, valeur relativement modeste pour un résonateur en quartz. La figure 2B montre la déformée vibratoire fortement agrandie de la structure de ce transducteur lorsque le résonateur vibre en torsion autour de son axe longitudinal. Ainsi qu'expliqué dans le brevet n° FR 2 739 190 déjà cité (page 22, ligne 6 - page 23, ligne 13), l'inertie en rotation des parties massives 2 et 4, et la souplesse en torsion du cadre flexible 5 caractérisent un filtre mécanique entre le résonateur 3 et la partie fixe 1 du transducteur, ladite partie fixe étant très peu sollicitée par les vibrations du résonateur. Les efforts alternatifs reçus par la partie fixe sont principalement un couple t dont l'intensité est très inférieure à celle du couple T appliqué par le résonateur sur chacune des parties massives 2 et 4. Cela permet de limiter les fuites d'énergie par période de la vibration à une valeur nettement plus faible que $10^{-4}$ fois l'énergie emmagasinée dans le résonateur. Ainsi, comme expliqué antérieurement, l'efficacité du filtrage mécanique réalisé par ce dispositif est bien adaptée au coefficient de qualité intrinsèque relativement modeste du résonateur, ce qui permet d'obtenir un bon fonctionnement du transducteur d'accélération. Toutefois, ce dispositif de filtrage mécanique ne pourrait convenir de façon satisfaisante à une structure de gyromètre pour laquelle, comme expliqué antérieurement, il est souhaitable que le coefficient de qualité intrinsèque du résonateur soit élevé, par exemple 3 x $10^5$. Dans ce cas, il est donc souhaitable que le dispositif de filtrage mécanique permette de limiter les fuites d'énergie par période de la vibration à une valeur nettement plus faible que $(3 \times 10^5)^{-1}$ fois l'énergie emmagasinée dans le résonateur. Si les masses et les raideurs du dispositif montré aux figures 2A et 2B étaient adaptées à obtenir cette efficacité nettement accrue, il en résulterait des inconvénients concernant la difficulté de définition et de réalisation de la structure de gyromètre, ainsi qu'il est expliqué dans ce qui suit. Dans le brevet n° FR 2 739 190 déjà cité, il est indiqué (page 23, lignes 29 à 36) que le dispositif de filtrage mécanique est efficace à la fréquence du résonateur (quelques dizaines de kHz) et que la tenue mécanique du transducteur n'est pas dégradée dans la bande passante d'utilisation (du continu à quelques centaines de Hz). Cela signifie que le cadre 5 montré aux figures 2A et 2B est suffisamment souple à quelques dizaines de kHz et suffisamment rigide à quelques centaines de Hz, et aussi que le dispositif de filtrage mécanique peut être considéré de façon simplifiée comme étant une suspension filtrante dont la fréquence de résonance Fs se situe vers quelques kHz, valeur environ dix fois inférieure à celle de la fréquence F du résonateur. Cette fréquence de suspension Fs est la plus basse des fréquences de résonance de la structure de transducteur. En raison de sa relative complexité, la structure présente un certain nombre de fréquences de résonance entre Fs et F, et la densité du spectre de ces fréquences de résonance augmente avec les valeurs de fréquence. Or le bon fonctionnement du résonateur nécessite d'éviter la proximité de sa fréquence de résonance F et d'une fréquence de résonance de structure. Cet impératif est donc d'autant plus facile à respecter que la fréquence F est basse. À l'inverse, l'efficacité de la suspension filtrante est d'autant plus grande que la fréquence F est élevée, comme l'indique la relation approchée suivante entre le couple alternatif total 2T appliqué par le résonateur sur l'équipage mobile constitué par les parties massives 2 et 4, et le couple alternatif t reçu par la partie fixe 1 :

$$t / 2T \approx Fs^2 / F^2$$

Dans la pratique, il est souhaitable que la fréquence F du résonateur ne dépasse pas une valeur égale à environ dix fois la fréquence la plus basse Fs de la structure, car cela permet que la géométrie de cette structure puisse être définie avec des tolérances de réalisation suffisamment larges pour être compatibles avec un faible coût de fabrication. Cette condition est satisfaite pour le transducteur d'accélération montré aux figures 2A et 2B, pour lequel le couple t reçu par la partie fixe est ainsi environ cent fois plus petit que le couple total 2T appliqué par le résonateur à ses "encastrements". Par contre, en ce qui concerne l'utilisation de ce type de suspension filtrante dans une structure de gyromètre, le lecteur aura compris que le besoin d'une efficacité nettement accrue conduirait à faire travailler le résonateur à une fréquence F notablement supérieure à dix fois la fréquence la plus basse Fs de la structure, ce qui aurait pour conséquences des difficultés de définition et de réalisation de la structure de gyromètre, et donc un accroissement de son coût de fabrication.

La présente invention propose une forme géométrique de structure monolithique de gyromètre qui, tout en limitant suffisamment les fuites d'énergie mécanique vibratoire du résonateur vers la partie fixe, est mieux adaptée aux besoins industriels en gyromètres performants et bon marché.

Selon l'invention, cette structure monolithique de gyromètre, comprenant une partie fixe, un résonateur, une première partie massive mobile solidaire d'une extrémité du résonateur, une seconde partie massive mobile, des premiers moyens de liaison reliant chacun la première partie massive mobile à la seconde partie massive mobile, et des seconds moyens de liaison reliant chacun la seconde partie massive mobile à la partie fixe, est caractérisée en ce que la seconde partie massive mobile n'est pas solidaire du résonateur et est située au voisinage de l'autre extrémité du résonateur, les premiers moyens de liaison sont deux premiers bras souples qui s'étendent de part et d'autre tout le long du résonateur, et les seconds moyens de liaison sont deux seconds bras souples qui s'étendent le long des premiers bras souples et relient directement la seconde partie massive mobile à la partie fixe.

Cette disposition de masses et de raideurs entre le résonateur et la partie fixe permet de procurer un filtrage mécanique suffisamment efficace tout en faisant travailler le résonateur à une fréquence F qui n'excède pas environ dix fois la fréquence la plus basse Fs de la structure. Cela permet que la définition et la réalisation de la structure soient facilitées et ainsi que son coût de fabrication soit réduit.

Selon une réalisation préférée, la partie fixe est constituée de deux parties situées le long de bords des deux seconds bras souples, bords opposés à des bords des seconds bras souples en regard des deux premiers bras souples.

De préférence, le résonateur est un diapason formé de deux branches identiques et parallèles, disposées en regard l'une de l'autre et solidaires, chacune à une extrémité, d'une partie commune, la première partie massive mobile étant solidaire du résonateur au voisinage de la zone de ladite partie commune la plus éloignée desdites branches.

Afin d'obtenir l'efficacité maximale du filtrage mécanique, la structure de gyromètre a un axe de symétrie.

De préférence, la fréquence la plus basse de vibration de résonance de la structure de gyromètre autour dudit axe de symétrie est sensiblement égale à la fréquence la plus basse de vibration de résonance de ladite structure, et la fréquence du résonateur est égale à environ dix fois ladite fréquence la plus basse de vibration de résonance.

Le dispositif selon l'invention est défini dans la revendication indépendante de dispositif 1.

Les modes particuliers de réalisation de l'invention sont définis dans les revendications dépendantes 2 à 11.

D'autres caractéristiques et avantages de l'invention apparaîtront plus clairement à la lecture de la description détaillée et des figures qui s'y rapportent dans lesquelles :

- les figures 1A, 1B et 1C sont des vues en perspective de structures de gyromètre appartenant à l'art antérieur et déjà commentées:

- les figures 2A et 2B sont des vues en perspective d'une structure de transducteur d'accélération appartenant à l'art antérieur et déjà commentée;
- la figure 3 est une vue en perspective d'une structure de gyromètre selon une première réalisation de l'invention;
- la figure 4 est une vue de face de la structure de gyromètre de la figure 3 montrant des efforts mécaniques et des mouvements provoqués par la vibration de torsion du résonateur;
- la figure 5 est une vue en perspective d'une variante d'une structure de gyromètre conforme à l'invention.

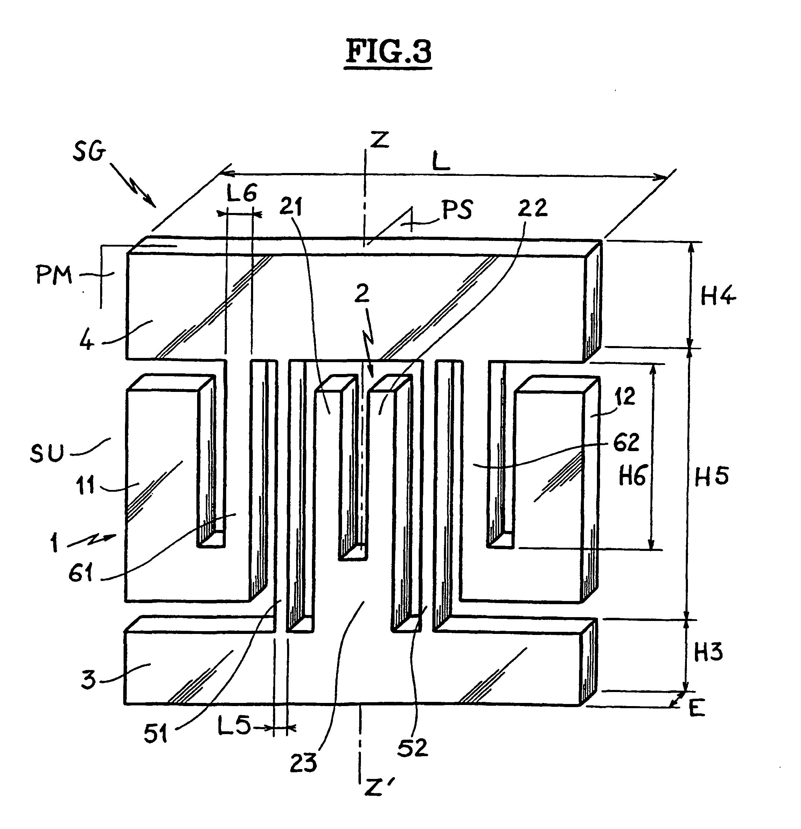

En référence à la figure 3, une structure de gyromètre SG selon l'invention comprend une partie fixe 1 constituée de deux parties 11 et 12, un résonateur 2, une première partie massive mobile 3, une seconde partie massive mobile 4, deux premiers bras souples 51 et 52, et deux seconds bras souples 61 et 62. Selon la réalisation illustrée à la figure 3, la structure de gyromètre SG constitue un corps monolithique usiné dans une même plaque de matériau, tel que du quartz ou du silicium, d'épaisseur uniforme E, de largeur L et de hauteur H4 + H5 + H3 prise suivant un axe central Z'Z. Cet axe Z'Z est contenu d'une part dans un plan médian PM de la plaque parallèle aux faces de celle-ci, et d'autre part dans un plan PS perpendiculaire aux faces de la plaque. Les plans PM et PS sont des plans de symétrie de la plaque et sont des plans de symétrie de la structure de gyromètre. Ainsi, l'axe Z'Z est un axe de symétrie de la structure de gyromètre.

Selon la réalisation illustrée à la figure 3, les parties 11 et 12, le résonateur 2, la première partie massive mobile 3, la seconde partie massive mobile 4, les deux premiers bras souples 51 et 52, et les deux seconds bras souples 61 et 62 ont tous la même dimension d'épaisseur E égale à celle de la plaque du matériau. Cela permet que l'usinage chimique soit très simple pour fabriquer le corps monolithique de la structure de gyromètre SG. L'usinage chimique peut être effectué soit à partir de l'une seulement des deux faces de la plaque jusqu'à traverser la plaque, soit à partir des deux faces simultanément jusqu'à dépasser une profondeur de gravure valant E/2. Cette technique d'usinage chimique, à l'échelle des structures réalisées dans la présente invention, ne permet pas une maîtrise rigoureuse des dimensions des différents éléments constitutifs. L'homme de l'art comprendra que cette imprécision doit être prise en compte dans l'interprétation de certains termes descriptifs, comme par exemple les largeurs et épaisseurs des éléments ou la symétrie de la structure.

Les parties 11 et 12 constituant la partie fixe sont disposées à deux extrémités de la structure de gyromètre de part et d'autre du plan PS respectivement, et sont destinées à être solidaires de la structure d'un engin (non représenté) par l'intermédiaire d'un support SU. Les parties 11 et 12 sont fixées sur le support SU par exemple par collage.

Selon la réalisation illustrée, le résonateur 2 est un diapason formé de deux branches 21 et 22 identiques et parallèles, disposées en regard l'une de l'autre de part et d'autre du plan PS respectivement, et solidaires, chacune à une extrémité, d'une partie commune 23. L'axe Z'Z est un axe longitudinal de symétrie du résonateur 2.

La première partie massive mobile 3 constitue un pavé parallélépipédique d'épaisseur E, de largeur L et de hauteur H3 disposé à une extrémité de la structure de gyromètre selon l'axe Z'Z et est solidaire du résonateur 2 au voisinage de la zone de la partie commune 23 la plus éloignée des branches 21 et 22. Ainsi, comme expliqué antérieurement, les fuites d'énergie mécanique vers la première partie massive mobile 3, et donc a fortiori vers la partie fixe, peuvent être suffisamment réduites pour le mode de flexion du diapason. Selon la réalisation illustré, l'inertie en rotation de la première partie massive mobile 3 autour de l'axe Z'Z est beaucoup plus grande que celle du résonateur 2.

La seconde partie massive mobile 4 constitue un pavé parallélépipédique d'épaisseur E, de largeur L et de hauteur H4 disposé à l'autre extrémité de la structure de gyromètre selon l'axe Z'Z. La seconde partie massive mobile 4 est ainsi située au voisinage des extrémités libres des branches 21 et 22 du résonateur 2. Selon la réalisation illustrée, la hauteur H4 de la seconde partie massive mobile 4 est supérieure à la hauteur H3 de la première partie massive mobile 3; H4 est généralement comprise entre une et trois fois la hauteur H3. L'inertie en rotation de la seconde partie massive mobile 4 autour de l'axe Z'Z est ainsi supérieure à celle de la première partie massive mobile 3.

Toujours selon la réalisation illustrée à la figure 3, chacun des deux premiers bras souples 51 et 52 constitue une poutre parallélépipédique dont la hauteur H5 s'étend parallèlement à l'axe Z'Z et est plus longue que celle du résonateur 2 prise parallèlement à l'axe Z'Z et dont la section rectangulaire transversale est définie par une épaisseur E et une largeur L5 prises respectivement suivant l'épaisseur E et la largeur L de la structure de gyromètre SG. Selon la représentation illustrée, la largeur L5 de chacun des deux premiers bras souples est inférieure à son épaisseur E; L5 est généralement comprise entre le cinquième et les trois-quarts de l'épaisseur E. Par contre, la hauteur H5 de chacun des deux premiers bras souples est nettement supérieure à son épaisseur E ; H5 est généralement comprise entre cinq et vingt-cinq fois l'épaisseur E. Les deux premiers bras souples 51 et 52 sont disposés de part et d'autre du résonateur 2 respectivement, de telle sorte que l'un des côtés de chacun des deux premiers bras souples parallèles au plan PS soit en regard de l'un des côtés extérieurs du résonateur parallèles au plan PS. Chacun des deux premiers bras souples est solidaire à ses deux extrémités de la première partie massive mobile 3 et de la seconde partie massive mobile 4 respectivement.

Ainsi., les deux premiers bras souples 51 et 52 et les première et seconde parties massives mobile 3 et 4 forment les quatre branches d'un "Il" entourant le résonateur 2. Les deux premiers bras souples 51 et 52 peuvent avoir d'autres constitutions que celle de la poutre parallélépipédique selon la réalisation illustrée à la figure 3. Par exemple, la largeur L5 peut évoluer de façon continue ou discontinue le long de la hauteur H5 des deux premiers bras souples 51 et 52. Les deux premiers bras souples 51 et 52 peuvent aussi ne pas s'étendre parallèlement à l'axe Z'Z, l'important étant que leurs souplesses autorisent des rotations en opposition de phase des première et seconde parties massives mobiles 3 et 4 autour de l'axe Z'Z.

Toujours selon la réalisation illustrée à la figure 3, chacun des deux seconds bras souples 61 et 62 constitue une poutre parallélépipédique dont la hauteur H6 s'étend parallèlement à l'axe Z'Z et est sensiblement moins longue que celle du résonateur et dont la section rectangulaire transversale est définie par une épaisseur E et par une largeur L6 prises respectivement suivant l'épaisseur E et la largeur L de la structure de gyromètre SG. Selon la représentation illustrée, la largeur L6 de chacun des deux seconds bras souples est du même ordre de grandeur que son épaisseur E; L6 est généralement comprise entre la moitié et le double de l'épaisseur E. Par contre, la hauteur H6 de chacun des deux seconds bras souples est nettement supérieure à son épaisseur E; H6 est généralement comprise entre trois et dix fois l'épaisseur E. Selon la représentation illustrée, la largeur L6 de chacun des deux seconds bras souples 61 et 62 est supérieure à la largeur L5 de chacun des deux premiers bras souples 51 et 52, et la hauteur H6 de chacun des deux seconds bras souples 61 et 62 est inférieure à la hauteur H5 de chacun des deux premiers bras souples 51 et 52. Les deux premiers bras souples 51 et 52 sont ainsi plus souples en flexion que les deux autre seconds bras souples 61 et 62. Les deux seconds bras souples 61 et 62 sont disposés de part et d'autre du plan PS respectivement, de telle sorte que chacun d'eux soit situé entre l'un des deux premiers bras souples 51 et 52 et l'une des deux parties 11 et 12 constituant la partie fixe. Ainsi, chacun des deux seconds bras souples longe l'un des deux premiers bras souples. Chacun des deux seconds bras souples 61 et 62 est solidaire à l'une de ses extrémités de la seconde partie massive mobile 4, et à l'autre extrémité de l'une des deux parties 11 et 12 au voisinage de la section terminale de ladite partie 11 ou 12 en regard de la première partie massive mobile 3. De même que pour les deux premiers bras souples 51 et 52, les deux seconds bras souples 61 et 62 peuvent avoir d'autres constitutions que celle de la poutre parallélépipédique selon la réalisation illustrée à la figure 3. Les deux seconds bras souples 61 et 62 peuvent aussi ne pas s'étendre parallèlement à l'axe Z'Z, l'important étant que leurs souplesses autorisent des rotations de la seconde partie massive mobile 4 autour de l'axe Z'Z.

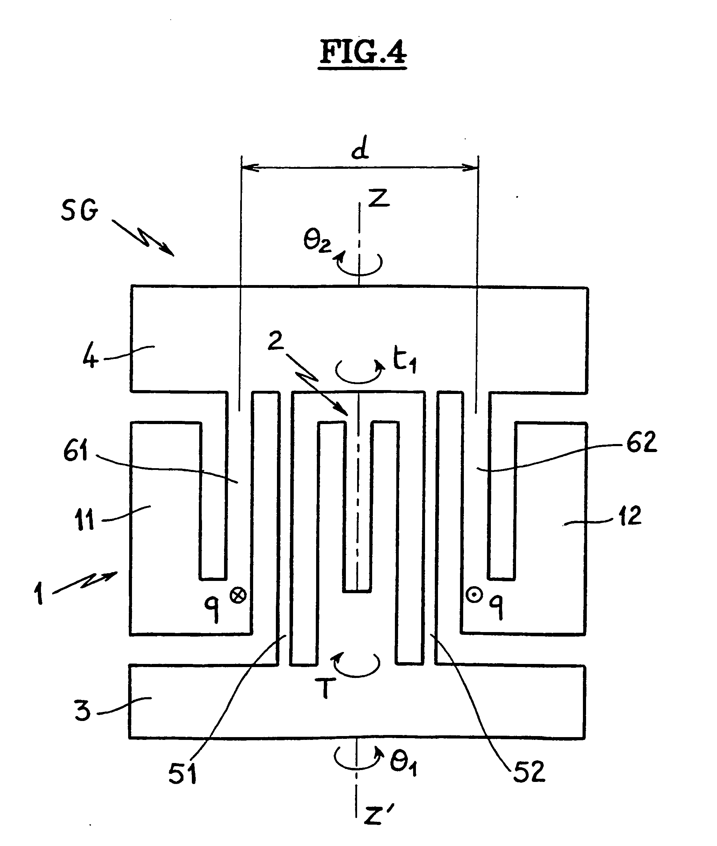

Le fonctionnement de la structure de gyromètre selon l'invention est maintenant présenté en référence à la figure 4 qui indique des efforts mécaniques et des mouvements provoqués par la vibration de torsion du résonateur. La figure 4 est une vue de face de la structure de gyromètre SG de la figure 3. Lorsque le résonateur 2 vibre en torsion autour de son axe longitudinal Z'Z, il applique un couple alternatif T sur la première partie massive mobile 3 qui subit de ce fait une rotation alternative $\theta_1$ autour de l'axe Z'Z qui est un axe principal d'inertie de ladite partie massive 3, cette rotation $\theta_1$ étant en opposition de phase avec le mouvement alternatif de torsion du résonateur 2. Le moment d'inertie $J_1$ en rotation de la première partie massive mobile 3 autour de l'axe Z'Z étant beaucoup plus grand que celui du résonateur 2, l'amplitude de la rotation alternative $\theta_1$ de ladite partie massive est beaucoup plus petite que l'amplitude de vibration en torsion du résonateur 2. Cette petite rotation alternative $\theta_1$ crée des vibrations forcées en flexion de faible amplitude des deux premiers bras souples 51 et 52, lesdites vibrations forcées étant en opposition de phase entre elles et produisant de ce fait globalement un couple alternatif $t_1$ sur la seconde partie massive mobile 4. Lesdits premiers bras souples 51 et 52 étant souples en flexion, l'intensité du couple $t_1$ est très inférieure à celle du couple T appliqué par le résonateur sur la première partie massive mobile 3. Le couple alternatif $t_1$ provoque une rotation alternative $\theta_2$ de la seconde partie massive mobile 4 autour de l'axe Z'Z qui est un axe principal d'inertie de la ladite partie massive 4, cette rotation $\theta_2$ étant en opposition de phase avec la rotation alternative $\theta_1$ de la première partie massive mobile 3. L'intensité du couple $t_1$ étant faible et le moment d'inertie J2 en rotation de la seconde partie massive mobile 4 autour de l'axe Z'Z étant important, l'amplitude de la rotation alternative $\theta_2$ de la seconde partie massive mobile 4 est très inférieure à celle de la rotation alternative $\theta_1$ de la première partie massive mobile 3. Cette très faible rotation alternative $\theta_2$ crée des vibrations forcées en flexion de très faible amplitude des deux seconds bras souples 61 et 62, lesdites vibrations forcées étant en opposition de phase entre elles, ce qui a pour conséquence de produire principalement des forces alternatives q de très faible intensité, perpendiculaires aux faces de la plaque de matériau et de sens contraires sur les parties 11 et 12 respectivement. Les parties 11 et 12 constituant la partie fixe, il en résulte que ladite partie fixe subit globalement un très faible couple alternatif $t_2$ dont l'intensité vaut sensiblement q x d, d étant la distance séparant les deux seconds bras souples 61 et 62. Ainsi, l'intensité du couple alternatif $t_2$ subi globalement par la partie fixe est très inférieure à celle du couple alternatif $t_1$ subi globalement par la seconde partie massive mobile 4, l'intensité dudit couple $t_1$ étant elle-même très inférieure à celle du couple alternatif T provoqué sur la première partie massive mobile 3 par les vibrations en torsion du résonateur 2. Le lecteur aura compris que le dispositif de filtrage mécanique de la structure de gyromètre SG selon l'invention peut-être vu comme étant l'association de deux dispositifs de suspension filtrante disposés "en série", et qu'ainsi il est possible d'obtenir un filtrage mécanique nettement plus efficace que celui procuré par la structure de transducteur d'accélération connu de la figure 2A. On aura également noté que la symétrie par rapport à l'axe Z' Z de la structure de gyromètre selon l'invention permet de faire coïncider des axes principaux d'inertie des première et seconde parties massives mobiles 3 et 4, ce qui permet de réduire l'amplitude des vibrations forcées en flexion des bras souples 51, 52, 61 et 62, ce qui est favorable à l'efficacité du filtrage mécanique.

Cependant, cette association en série de deux suspensions filtrantes, que nous appellerons "double suspension filtrante", n'est pas suffisante en soi pour définir la structure de gyromètre selon l'invention qui, tout en procurant un filtrage mécanique accru, permet que la fréquence F du résonateur ne dépasse pas une valeur égale à environ dix fois la fréquence la plus basse Fs de la structure, afin que la définition et la réalisation de ladite structure soient facilitées et ainsi que son coût de fabrication soit réduit comme expliqué antérieurement. C'est l'aspect compact de la disposition des deux suspensions filtrantes de la structure selon l'invention qui permet d'obtenir ce résultat. Si cette disposition n'était pas compacte, par exemple si le résonateur 2, la première partie massive mobile 3, les deux premiers bras souples 51 et 52, la seconde partie massive mobile 4 et les deux seconds bras souples 61 et 62 s'échelonnaient dans cet ordre le long de l'axe Z'Z, il en résulterait que la fréquence la plus basse Fs de la structure correspondrait à un mode de flexion d'ensemble sans utilité pour le filtrage mécanique, la fréquence utile étant la fréquence la plus basse $Fs_1s_2$ de vibration de la double suspension filtrante autour de l'axe Z'Z ; cette fréquence utile $Fs_1s_2$ aurait donc une valeur comprise entre Fs et F, par exemple $Fs_1s_2 = 2Fs = F/5$ ; l'efficacité de la double suspension filtrante étant d'autant plus grande que l'écart entre $Fs_1s_2$ et F est important, on voit pour cet exemple, qui respecte la condition F = 10 Fs, que la disposition "échelonnée" de la structure le long de l'axe Z'Z ne pourrait permettre de bénéficier du filtrage mécanique maximal autorisé par le concept. Selon l'invention, la disposition compacte des deux suspensions filtrantes de la structure permet que la fréquence utile Fsls2 soit voisine de la fréquence la plus basse Fs de la structure de gyromètre, ce qui permet de bénéficier d'un filtrage mécanique accru, tout en faisant travailler le résonateur à une fréquence F qui n'excède pas environ dix fois la fréquence la plus basse Fs de la structure. Cette compacité de la disposition des deux suspensions filtrantes de la structure de gyromètre selon l'invention est caractérisée en ce que la seconde partie massive mobile 4 est située au voisinage de l'extrémité libre du résonateur 2, et que le résonateur 2 et les quatre bras souples 51, 52, 61 et 62 sont situés sensiblement au même niveau le long de l'axe Z'Z.

De préférence, afin de tirer le meilleur parti de la structure de gyromètre selon l'invention, les inerties des parties massives mobiles 3 et 4, et les souplesses des bras souples 51, 52, 61 et 62 satisfont à certaines relations, ainsi qu'il est expliqué dans ce qui suit en référence à la figure 3. On a compris que la double suspension filtrante de la structure selon l'invention est constituée d'une première suspension filtrante comprenant la première partie massive mobile 3 et les deux premiers bras souples 51 et 52, et d'une seconde suspension filtrante comprenant la seconde partie massive mobile 4 et les deux seconds bras souples 61 et 62. Pour chacune des deux suspensions filtrantes, on peut définir une fréquence propre de vibration autour de l'axe Z'Z en considérant le cas fictif où serait encastrée l'extrémité de chacun des deux bras souples opposée à l'extrémité solidaire de la partie massive mobile; on définit ainsi les fréquences propres $Fs_1$ et $Fs_2$ pour les première et seconde suspensions filtrantes respectivement. La valeur de chacune desdites fréquences propres, respectivement $Fs_1$ et $Fs_2$, est déterminée en fonction du moment d'inertie en rotation autour de l'axe Z'Z de la partie massive mobile correspondante, respectivement $J_1$ et $J_2$ précédemment définis, et de la raideur angulaire que présentent globalement les deux bras souples correspondants vis-à-vis d'une rotation de la partie massive mobile correspondante autour de l'axe Z'Z, respectivement $C_1$ pour les deux premiers bras souples et $C_2$ pour les deux seconds bras souples. On a ainsi les relations :

$$Fs_1 \approx \frac{1}{2\pi}\sqrt{\frac{C_1}{J_1}} \text{ et } Fs_2 \approx \frac{1}{2\pi}\sqrt{\frac{C_2}{J_2}}$$

Malgré leur caractère fictif, ces deux fréquences propres sont intéressantes par le fait qu'elles apparaissent dans le traitement des équations qui traduisent le comportement mécanique vibratoire de la structure de gyromètre selon l'invention ; les fréquences propres $Fs_1$ et $Fs_2$ peuvent ainsi être considérées comme étant des paramètres d'une optimisation des dimensions de ladite structure de gyromètre. La recherche de cette optimisation fait apparaître qu'il est avantageux, pour l'efficacité du filtrage mécanique, que la moyenne des fréquences propres $Fs_1$ et $Fs_2$ soit égale environ au cinquième de la fréquence F du résonateur, et que la fréquence propre $Fs_2$ soit comprise entre une fois et trois fois la fréquence propre $Fs_1$. De plus, il est avantageux également que le moment d'inertie $J_2$ de la seconde partie massive mobile 4 soit compris entre une fois et trois fois le moment d'inertie $J_1$ de la première partie massive mobile 3, et que la raideur angulaire globale $C_2$ des deux seconds bras souples 61 et 62 soit comprise entre deux fois et dix fois la raideur angulaire globale $C_1$ des deux premiers bras souples 51 et 52.

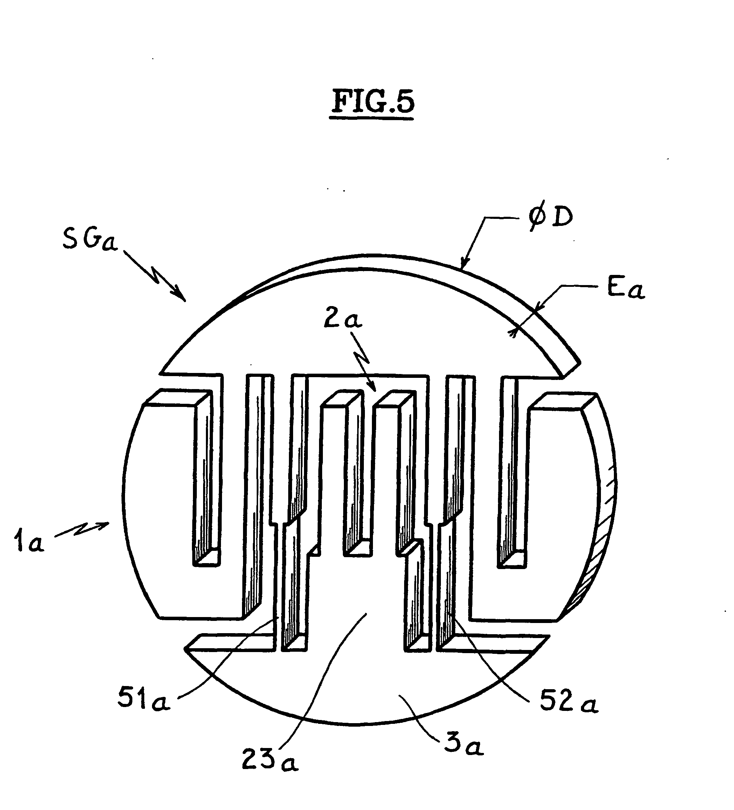

La figure 5 montre une autre réalisation de structure de gyromètre selon l'invention. La structure de gyromètre SGa diffère de la structure de gyromètre SG représentée sur la figure 3 principalement par sa forme générale discoïde de diamètre D et d'épaisseur Ea, par la forme non parallélépipédique des deux premiers bras souples 51a et 52a, et par des plus grandes dimensions de la partie commune 23a du diapason 2a prises parallèlement aux grandes faces de la structure de gyromètre. La forme générale discoïde est bien adaptée à l'utilisation d'un boîtier cylindrique de faible encombrement destiné à contenir la structure de gyromètre SGa. Concernant la forme non parallélépipédique des deux premiers bras souples 51a et 52a, on voit que chacun desdits bras souples est constitué de deux tronçons parallélépipédiques, ce qui permet de disposer de paramètres dimensionnels supplémentaires pour, par exemple, éviter plus facilement la proximité de la fréquence F du résonateur et d'une fréquence de résonance de structure. Concernant les plus grandes dimensions de la partie commune 23a, cela permet d'améliorer encore le filtrage mécanique des vibrations de flexion du diapason 2a. Par ailleurs, cette réalisation montrée à la figure 5 permet de bénéficier des mêmes avantages que ceux de la réalisation illustrée à la figure 3, concernant l'efficacité du filtrage mécanique des vibrations de torsion du diapason et le faible coût de fabrication. Ainsi, il est possible de réaliser une structure de gyromètre SGa en quartz selon l'invention, de diamètre D = 9 mm, d'épaisseur Ea = 0,5 mm, dont la fréquence la plus basse Fs soit égale à 3 kHz, et dont le résonateur vibre en torsion à 30 kHz et présente un coefficient de qualité intrinsèque valant $3 \times 10^5$; le couple alternatif reçu globalement par la partie fixe 1a de ladite structure est plus de mille fois inférieur au couple alternatif provoqué sur la première partie massive 3a par les vibrations en torsion du résonateur 2a, ce qui permet que le coefficient de qualité réel du résonateur soit pratiquement égal à son coefficient de qualité intrinsèque ; de plus, les fréquences de résonance de structure sont situées à plus de 5 kHz de la fréquence du résonateur, ce qui est nettement suffisant pour permettre un bon fonctionnement du résonateur, tout en bénéficiant de tolérances de réalisation suffisamment larges pour être compatibles avec un faible coût de fabrication.

## Revendications

1. Structure monolithique de gyromètre, usinée dans une plaque de matériau, comprenant une partie fixe (1), un résonateur (2), une première partie massive mobile (3) solidaire d'une extrémité du résonateur (2), une seconde partie massive mobile (4), des premiers moyens de liaison reliant chacun la première partie massive mobile (3) à la seconde partie massive mobile (4), et des seconds moyens de liaison reliant chacun la seconde partie massive mobile (4) à la partie fixe (1), **caractérisée en ce que** la seconde partie massive mobile (4) n'est pas solidaire du résonateur (2) et est située au voisinage de l'autre extrémité du résonateur (2), les premiers moyens de liaison sont deux premiers bras souples (51, 52) qui s'étendent de part et d'autre tout le long du résonateur (2) et les seconds moyens de liaison sont deux seconds bras souples (61, 62) qui s'étendent le long des premiers bras souples et relient directement la seconde partie massive mobile (4) à la partie fixe (1).

2. Structure monolithique de gyromètre selon la revendication 1, **caractérisée en ce que** la partie fixe (1) est constituée de deux parties (11, 12) situées le long de bords des deux seconds bras souples (61, 62) qui sont opposés à des bords des seconds bras souples en regard des deux premiers bras souples (51, 52).

3. Structure monolithique de gyromètre selon la revendication 1 ou 2, **caractérisée en ce que** le résonateur (2) est un diapason formé de deux branches (21, 22) identiques et parallèles, disposées en regard l'une de l'autre et solidaires, chacune à une extrémité, d'une partie commune (23).

4. Structure monolithique de gyromètre selon l'une quelconque des revendications 1 à 3, **caractérisée en ce que** la première partie massive mobile (3) et la seconde partie massive mobile (4) sont chacune un pavé parallélépipédique dont l'épaisseur est égale à l'épaisseur de la plaque de matériau usinée, et la hauteur (H4) de la seconde partie massive mobile (4) est comprise entre une et trois fois la hauteur (H3) de la première partie massive mobile (3).

5. Structure monolithique de gyromètre selon l'une quelconque des revendications 1 à 4, **caractérisée en ce que** chacun des deux premiers bras souples (51, 52) est une poutre parallélépipédique dont l'épaisseur est égale à l'épaisseur de la plaque de matériau usinée, la largeur (L5) est comprise entre le cinquième et les trois-quarts de ladite épaisseur de plaque, et la hauteur (H5) est comprise entre cinq et vingt-cinq fois ladite épaisseur de plaque.

6. Structure monolithique de gyromètre selon l'une quelconque des revendications 1 à 5, **caractérisée en ce que** chacun des deux seconds bras souples (61, 62) est une poutre parallélépipédique dont l'épaisseur est égale à l'épaisseur de la plaque de matériau usinée, la largeur (L6) est comprise entre la moitié et le double de ladite épaisseur de plaque, et la hauteur (H6) est comprise entre trois et dix fois ladite épaisseur de plaque.

7. Structure monolithique de gyromètre selon les revendications 5 et 6, **caractérisée en ce que** la largeur (L6) de chacun des seconds bras souples (61, 62) est supérieure à la largeur (L5) de chacun des deux premiers bras souples (51, 52), et la hauteur (H6) de chacun des deux seconds bras souples (61, 62) est inférieure à la hauteur (H5) de chacun des deux premiers bras souples (51, 52).

8. Structure monolithique de gyromètre selon l'une quelconque des revendications précédentes, **caractérisée en ce qu'**elle présente un axe de symétrie (Z'Z).

9. Structure monolithique de gyromètre selon la revendication 8, **caractérisée en ce que** le moment d'inertie de la seconde partie massive mobile (4) autour dudit axe de symétrie (Z'Z) est compris entre une et trois fois celui de la première partie massive mobile (3).

10. Structure monolithique de gyromètre selon la revendication 9, **caractérisée en ce que** la fréquence la plus basse de vibration de résonance de ladite structure autour dudit axe de symétrie (Z'Z) est sensiblement égale à la fréquence la plus basse de vibration de résonance de ladite structure, et la fréquence de résonance du résonateur (2) est égale à environ dix fois ladite fréquence la plus basse de vibration de résonance de ladite structure.

11. Structure monolithique de gyromètre selon l'une quelconque des revendications précédentes, **caractérisée en ce que** la partie fixe (1), le résonateur (2), la première partie massive mobile (3), la seconde partie massive mobile (4), les deux premiers bras souples (51, 52), et les deux seconds bras souples (61, 62) ont une épaisseur égale à l'épaisseur de la plaque de matériau usinée.

**Patentansprüche**

1. Monolithische Gyrometerstruktur, aus einer Werkstoffplatte gearbeitet, umfassend einen ruhenden Teil (1), einen Resonator (2), einen ersten mobilen massiven Teil (3), der mit einem Ende des Resonators (2) fest verbunden ist, einen zweiten mobilen massiven Teil (4), erste Verbindungsmittel, die jeweils den ersten mobilen massiven Teil (3) mit dem zweiten mobilen massiven Teil (4) verbinden und zweite Verbindungsmittel, die den zweiten mobilen massiven Teil (4) mit dem ruhenden Teil (1) verbinden, **dadurch gekennzeichnet, dass** der zweite mobile massive Teil (4) nicht mit dem Resonator (2) ruhend verbunden ist und sich in der Nähe des anderen Endes des Resonators (2) befindet, die ersten Verbindungsmittel zwei erste biegsame Arme (51, 52) sind, die sich beiderseits über die ganze Länge des Resonators (2) erstrecken und die zweiten Verbindungsmittel zwei zweite biegsame Arme (61, 62) sind, die sich längs der ersten biegsamen Arme erstrecken und den zweiten mobilen massiven Teil (4) direkt mit dem ruhenden Teil (1) verbinden,

**2.** Monolithische Gyrometerstruktur nach Patentanspruch 1, **dadurch gekennzeichnet, dass** der ruhende Teil (1) aus zwei Teilen (11, 12) besteht, die längs Kanten der zwei zweiten biegsamen Arme (61, 62) verlaufen, die von den Kanten der zweiten biegsamen Arme abgewandt sind, die den beiden ersten biegsamen Armen (51, 52) gegenüber liegen.

**3.** Monolithische Gyrometerstruktur nach Patentanspruch 1 oder 2, **dadurch gekennzeichnet, dass** der Resonator (2) eine Stimmgabel ist, die aus zwei identischen und parallelen Armen (21, 22) besteht, die einander zugewandt und jeder an einem Ende mit einem gemeinsamen Teil (23) fest verbunden sind.

**4.** Monolithische Gyrometerstruktur nach irgendeinem der Patentansprüche 1 bis 3, **dadurch gekennzeichnet, dass** der erste mobile massive Teil (3) und der zweite mobile massive Teil (4) jeweils ein Quader ist, dessen Dicke der Dicke der bearbeiteten Werkstoffplatte gleich ist, und die Höhe (H4) des zweiten mobilen massiven Teils (4) zwischen der einfachen und der dreifachen Höhe (H3) des ersten mobilen massiven Teils (3) beträgt.

**5.** Monolithische Gyrometerstruktur nach irgendeinem der Patentansprüche 1 bis 4, **dadurch gekennzeichnet, dass** jeder der beiden ersten biegsamen Arme (51, 52) ein quaderförmiger Balken ist, dessen Dicke der Dicke der bearbeiteten Werkstoffplatte gleich ist, die Breite (L5) zwischen einem Fünftel und drei Vierteln der genannten Plattendikke beträgt, und die Höhe (H5) zwischen dem Fünf- und dem Fünfundzwanzigfachen der genannten Plattendicke beträgt.

**6.** Monolithische Gyrometerstruktur nach irgendeinem der Patentansprüche 1 bis 5, **dadurch gekennzeichnet, dass** jeder der beiden zweiten biegsamen Arme (61, 62) ein quaderförmiger Balken ist, dessen Dicke der Dicke der bearbeiteten Werkstoffplatte gleich ist, die Breite (L6) zwischen der Hälfte und dem Doppelten der genannten Plattendicke beträgt, und die Höhe (H6) zwischen dem Drei- und dem Zehnfachen der genannten Plattendicke beträgt.

**7.** Monolithische Gyrometerstruktur nach den Patentansprüchen 5 und 6, **dadurch gekennzeichnet, dass** die Breite (L6) jedes der zweiten biegsamen Arme (61, 62) größer ist, als die Breite (L5) jedes der beiden ersten biegsamen Arme (51, 52), und die Höhe (H6) jedes der beiden zweiten biegsamen Arme (61, 62) kleiner ist, als die Höhe (H5) jedes der beiden ersten biegsamen Arme (51, 52).

**8.** Monolithische Gyrometerstruktur nach irgendeinem der vorangehenden Patentansprüche, **dadurch gekennzeichnet, dass** sie eine Symmetrieachse (Z'Z) aufweist.

**9.** Monolithische Gyrometerstruktur nach Patentanspruch 8, **dadurch gekennzeichnet, dass** das Trägheitsmoment des zweiten mobilen massiven Teils (4) um die genannte Symmetrieachse (Z'Z) zwischen dem Einfachen und dem Dreifachen dessen des ersten mobilen massiven Teils (3) beträgt.

**10.** Monolithische Gyrometerstruktur nach Patentanspruch 8, **dadurch gekennzeichnet, dass** die niedrigste Vibrations-Resonanzfrequenz der genannten Struktur um die genannte Symmetrieachse (Z'Z) im Wesentlichen der niedrigsten Vibrations-Resonanzfrequenz der genannten Struktur gleich ist und die Resonanzfrequenz des Resonators (2) ungefähr gleich dem Zehnfachen der genannten niedrigsten Vibrations-Resonanzfrequenz der genannten Struktur ist.

**11.** Monolithische Gyrometerstruktur nach irgendeinem der vorangehenden Patentansprüche, **dadurch gekennzeichnet, dass** der ruhende Teil (1), der Resonator (2), der erste mobile massive Teil (3), der zweite mobile massive Teil (4), die beiden ersten biegsamen Arme (51, 52) und die beiden zweiten biegsamen Arme (61, 62) eine Dicke gleich der Dicke der bearbeiteten Werkstoffplatte haben.

**Claims**

**1.** A monolithic rate gyro structure machined in a plate of material, comprising a fixed part (1), a resonator (2), a first mobile mass part (3) fastened to a first end of the resonator (2), a second mobile mass part (4), first connecting means connecting each the first mobile mass part (3) to the second mobile mass part (4), and second connecting means connecting each the second mobile mass part (4) to the fixed part (1), **characterized in that** the second mobile mass part (4) is not fastened to the resonator (2) and is situated in the vicinity of a second end of the resonator (2), the first connecting means are first two flexible arms (51, 52) which extend along the whole of the resonator (2) on respective opposite sides thereof and the second connecting means are second two flexible arms (61, 62) which extend along the first flexible arms and connect the second mobile mass part (4) directly to the fixed part (1).

**2.** A monolithic rate gyro structure according to claim 1, **characterized in that** the fixed part (1) consists of two parts (11, 12) situated along edges of the second two flexible arms (61, 62) opposite edges of the second flexible arms facing the first two flexible arms (51, 52).

**3.** A monolithic rate gyro structure according to claim 1 or 2, **characterized in that** the resonator (2) is a tuning fork formed of two identical and parallel branches (21, 22) facing each other and each fastened at one end to a common part (23).

**4.** A monolithic rate gyro structure according to any one of claims 1 to 3, **characterized in that** the first mobile mass part (3) and the second mobile mass part (4) each are a parallelepiped-shaped block whose thickness is equal to the thickness of the machined plate, and the height (H4) of the second mobile mass part (4) lies between once and three times the height (H3) of the first mobile mass part (3).

**5.** A monolithic rate gyro structure according to any one of claims 1 to 4, **characterized in that** each of the first two flexible arms (51, 52) is a parallelepiped-shaped beam whose thickness is equal to the thickness of the machined plate, whose width (L5) lies between 1/5 and 3/4 said plate thickness, and whose height (H5) lies between five and twenty-five times said plate thickness.

**6.** A monolithic rate gyro structure according to any one of claims 1 to 5, **characterized in that** each of the second two flexible arms (61, 62) is a parallelepiped-shaped beam whose thickness is equal to the thickness of the machined plate, whose width (L6) lies between half and twice said plate thickness, and whose height (H6) lies between three and ten times said plate thickness.

**7.** A monolithic rate gyro structure according to claims 5 and 6, **characterized in that** the width (L6) of each of the second two flexible arms (61, 62) is greater than the width (L5) of each of the first two flexible arms (51, 52), and the height (H6) of each of the second two flexible arms (61, 62) is less than the height (H5) of each of said first two flexible arms (51, 52).

**8.** A monolithic rate gyro structure according to any one of preceding claims, **characterized in that** it has an axis of symmetry (Z'Z).

**9.** A monolithic rate gyro structure according to claim 8, **characterized in that** the second mobile mass part (4) has a moment of inertia about said axis of symmetry (Z'Z) lying between once and three times that of the first mobile mass part (3).

**10.** A monolithic rate gyro structure according to claim 9, **characterized in that** the lowest frequency of vibration of resonance of said structure about said axis of symmetry (Z'Z) is substantially equal to the lowest frequency of vibration of resonance of said structure, and the resonant frequency of the resonator (2) is equal to approximately ten times said lowest frequency of vibration of resonance of said structure.

**11.** A monolithic rate gyro structure according to any one of preceding claims, **characterized in that** the fixed part (1) and resonator (2), the first mobile mass part (3), the second mobile mass part (4), the first two flexible arms (51, 52) and the second two flexible arms (61, 62) have a thickness equal to the thickness of the machined plate.

## FIG.1A
(TECHNIQUE ANTERIEURE)

30
(51)

## FIG.1B
(TECHNIQUE ANTERIEURE)

30
(51)

30a

## FIG.1C
(TECHNIQUE ANTERIEURE)

51

52

57A

57A

58

54

76

A

55

m

78b

78a

78

57B

78C

53

B

57B

# FIG.2A

## (TECHNIQUE ANTERIEURE)

# FIG.2B

## (TECHNIQUE ANTERIEURE)

# FIG.3

# FIG.4

# FIG.5